# FASCICULE DE BREVET EUROPEEN

(11) **EP 2 759 774 B1**
(45) Date de publication et mention de la délivrance du brevet: **20.12.2017**
(21) Numéro de dépôt: 14152320.9
(22) Date de dépôt: 23.01.2014
(51) Int. Cl.: F24D 11/02, F25B 13/00, F25B 30/06, F24D 15/04

(54) **Procédé pour la régulation des températures et la production d'eau chaude sanitaire et installation pour la mise en oeuvre dudit procédé**
Verfahren zur Temperaturregulierung und Warmwassererzeugung, und Anlage zur Umsetzung dieses Verfahrens
Method for regulating the temperatures and the production of domestic hot water and facility for carrying out said method

(30) Priorité: 25.01.2013 FR 1203502
(43) Date de publication de la demande: 30.07.2014
(73) Titulaire: Weyh et Fils, 68590 Saint Hippolyte (FR)
(72) Inventeur: WEYH Arnaud, F-67600 KINTZHEIM (FR)
(74) Mandataire: Hugues, Catherine

(56) Documents cités:
- EP-A1- 2 322 880
- WO-A1-2009/048416
- US-A1- 2010 108 290
- US-A1- 2011 272 117

## Description

### Domaine technique :

La présente invention concerne un procédé pour la régulation des températures et la production d'eau chaude sanitaire au sein d'une structure telle que notamment une cave vinicole.

L'invention concerne également une installation pour la mise en oeuvre dudit procédé.

### Technique antérieure :

De manière classique, une structure telle qu'une cave vinicole présente des besoins thermiques spécifiques directement liés à son activité. Ainsi, afin de garantir le bon déroulement du processus de fabrication du vin, il est primordial de disposer d'une installation permettant de réguler avec réactivité et de manière précise les températures des cuves de vinification à chaque étape du processus. En outre, comme pour tout bâtiment, il existe des besoins en matière de production d'eau chaude sanitaire, de chauffage ou de climatisation des locaux.

Etant donné les volumes importants à traiter, le coût de l'énergie nécessaire pour couvrir l'ensemble des besoins thermiques d'une structure telle qu'une cave vinicole représente une charge particulièrement importante. Comme dans de nombreux secteurs, l'industrie vinicole a traditionnellement fait appel au fioul pour ses besoins énergétiques. Du fait de l'explosion du prix du fioul au cours de la dernière décennie, il est aujourd'hui fondamental de trouver des solutions alternatives permettant de maintenir les dépenses énergétiques des caves vinicoles à un niveau raisonnable et dépourvu d'impact sur leur santé financière.

Par ailleurs, le fait de recourir au fioul pour satisfaire aux besoins énergétiques d'une industrie de type cave vinicole suppose également l'émission d'une quantité importante de dioxyde de carbone. Ceci représente un autre inconvénient majeur, en particulier dans le contexte actuel des lois du Grenelle de l'Environnement qui ont d'ores et déjà rendu obligatoire, pour certaines entreprises, la réalisation d'un bilan des émissions de gaz à effet de serre, et d'une synthèse des actions envisagées pour réduire leurs émissions de gaz à effet de serre. un exemple de procédé pour la régulation des températures et la production d'eau chaude sanitaire au sein d'une structure et une installation pour la mise en ouvre d'un tel procédé selon le préambule des revendications 1 et 10 est connu de US2011/2722117 A1.

### Exposé de l'invention :

La présente invention vise à pallier les inconvénients précédemment évoqués en proposant un procédé et une installation spécifiquement étudiés pour à la fois répondre à l'ensemble des besoins thermiques d'une structure telle qu'une cave vinicole et présenter un coefficient de performance élevé permettant de réduire la facture énergétique de manière considérable. Un autre objet de l'invention est de proposer une solution respectueuse de l'environnement et conforme aux critères de développement durable notamment en termes de taux d'émission de gaz à effet de serre. Un autre objet de l'invention est de proposer une installation pour la régulation des températures et la production d'eau chaude sanitaire d'une industrie telle qu'une cave vinicole permettant un retour sur investissement rapide.

A cet effet, la présente invention a pour objet un procédé du genre indiqué en préambule, caractérisé en ce que l'on utilise au moins une première pompe à chaleur et au moins une seconde pompe à chaleur, l'une d'entre elles au moins étant de type géothermique et étant reliée à au moins une source d'énergie géothermique, on prélève des calories au sein d'au moins un volume de ladite structure au moyen de ladite première pompe à chaleur et/ou de ladite seconde pompe à chaleur pour provoquer une baisse de la température au sein dudit au moins un volume de ladite structure, et/ou on introduit des calories au sein d'au moins un volume de ladite structure au moyen de ladite première pompe à chaleur et/ou de ladite seconde pompe à chaleur pour provoquer une augmentation de la température au sein dudit au moins un volume de ladite structure, ledit procédé prévoyant encore que lorsqu'on prélève des calories au sein d'au moins un volume de ladite structure au moyen de ladite première pompe à chaleur et/ou de ladite seconde pompe à chaleur, on récupère et on stocke temporairement lesdites calories prélevées dans ledit au moins un volume dans au moins un réservoir tampon, puis on transfère au moins une partie desdites calories stockées temporairement dans ledit réservoir tampon vers ladite première pompe à chaleur et/ou vers ladite seconde pompe à chaleur et/ou vers ladite source d'énergie géothermique, tandis que lorsqu'on introduit des calories au sein d'au moins un volume de ladite structure au moyen de ladite première pompe à chaleur et/ou de ladite seconde pompe à chaleur, on récupère et on stocke temporairement dans ledit ballon tampon les frigories générées concomitamment par ladite première pompe à chaleur et/ou ladite seconde pompe à chaleur, puis on transfère au moins une partie desdites frigories stockées temporairement dans ledit réservoir tampon vers ladite première pompe à chaleur et/ou vers ladite seconde pompe à chaleur et/ou vers ladite source d'énergie géothermique.

Conformément à une variante de mise oeuvre préférentielle du procédé selon l'invention, l'on utilise au moins deux pompes à chaleur de type géothermique.

Conformément à une autre alternative du présent procédé, l'on utilise au moins une pompe à chaleur de type géothermique et au moins une pompe à chaleur de type aérothermique.

Par ailleurs, le procédé selon l'invention prévoit encore la possibilité d'utiliser au moins une pompe à chaleur de type réversible.

Avantageusement, ledit réservoir tampon peut être utilisé pour stocker temporairement des calories fournies par au moins une source d'énergie supplémentaire.

Dans ce cas, l'on peut utiliser l'énergie solaire en tant que source d'énergie supplémentaire.

Conformément à une autre variante de mise en oeuvre du procédé selon l'invention, il encore possible de stocker temporairement au moins une partie desdites calories excédentaires ou desdites frigories au sein d'au moins un dispositif de stockage additionnel.

Dans ce cas, l'on utilise par exemple en tant que dispositif de stockage additionnel au moins une batterie thermique comportant au moins un matériau à changement de phase.

Conformément au présent procédé l'on peut utiliser ledit réservoir tampon ou ledit dispositif de stockage additionnel pour stocker des calories ou des frigories prélevées au sein de ladite source d'énergie géothermique au moyen d'au moins ladite première ou seconde pompe à chaleur.

L'invention a également trait à une installation pour la mise en oeuvre du procédé tel que décrit ci-dessus, caractérisée en ce qu'elle comporte au moins une première pompe à chaleur et au moins une seconde pompe à chaleur, l'une d'entre elles au moins étant de type géothermique et étant reliée à au moins une source d'énergie géothermique, ladite installation étant agencée pour, selon les besoins, prélever des calories au sein d'au moins un volume de ladite structure au moyen de ladite première pompe à chaleur et/ou de ladite seconde pompe à chaleur afin de provoquer une baisse de la température au sein dudit au moins un volume de ladite structure, et/ou introduire des calories au moyen de ladite première pompe à chaleur et/ou de ladite seconde pompe à chaleur afin de provoquer une augmentation de la température au sein d'au moins un volume de ladite structure, ladite installation comportant en outre au moins un réservoir tampon agencé pour, selon le cas:
- récupérer et stocker temporairement au moins une partie des calories prélevées par ladite première pompe à chaleur et/ou ladite seconde pompe à chaleur dans ledit au moins un volume, ou
- récupérer et stocker les frigories générées concomitamment par ladite première pompe à chaleur et/ou ladite seconde pompe à chaleur lorsqu'elle introduit des calories dans ledit au moins un volume de ladite structure,
ledit réservoir tampon étant en outre agencé pour transférer au moins une partie desdites calories ou desdites frigories stockées temporairement dans ledit réservoir tampon vers ladite première pompe à chaleur et/ou ladite seconde pompe à chaleur et/ou ladite source d'énergie géothermique.

Conformément à une première variante de réalisation, l'installation selon l'invention comporte au moins deux pompes à chaleur de type géothermique.

Selon une autre variante de réalisation, l'installation comporte au moins une pompe à chaleur de type géothermique et au moins une pompe à chaleur de type aérothermique.

Une caractéristique additionnelle de l'installation selon l'invention réside dans le fait que l'une au moins desdites première ou seconde pompe à chaleur est de type réversible.

Avantageusement, le réservoir tampon peut optionnellement être relié à au moins un panneau solaire agencé pour récupérer le rayonnement solaire.

D'autre part le fait que l'installation comporte au moins un dispositif de stockage additionnel agencé pour stocker lesdites calories ou lesdites frigories tel que notamment au moins une batterie thermique comportant au moins un matériau à changement de phase constitue une autre caractéristique de l'invention.

Conformément à l'invention le dispositif de stockage additionnel peut être intégré audit réservoir tampon ou relié audit réservoir tampon au moyen d'un circuit hydraulique.

Installation selon l'invention se caractérise en outre en ce qu'elle comporte une centrale de gestion.

### Description sommaire des dessins :

La présente invention et ses avantages apparaîtront mieux dans la description suivante de deux modes de réalisation donnés à titre d'exemples non limitatifs, en référence aux dessins annexés, dans lesquels:
- la figure 1 représente une vue schématique d'un dispositif selon l'invention comprenant deux pompes à chaleur géothermiques, de type réversible, reliées à deux sondes géothermiques agencées pour prélever les calories du sol, et
- la figure 2 représente une vue schématique d'un dispositif selon l'invention comprenant deux pompes à chaleur géothermiques de type réversible reliées à un forage aquathermique, une pompe à chaleur aérothermique de type non réversible, et une batterie thermique.

### Illustrations de l'invention et meilleures manières de la réaliser :

En référence aux figures, la présente invention a pour objet une installation 1, 10 de régulation des températures et de production d'eau chaude sanitaire d'une structure telle que notamment une cave vinicole, ainsi qu'un procédé mis en oeuvre par une telle installation 1, 10.

Afin de répondre à l'ensemble des besoins thermiques d'une structure telle qu'une cave vinicole évoqués dans la partie introductive de la présente demande, une installation 1, 10 selon l'invention comporte avantageusement à la fois au moins un équipement capable de générer des calories pour introduire de la chaleur dans un volume destiné à être réchauffé, et au moins un équipement capable de générer des frigories pour introduire du froid dans un volume destiné à être refroidi, les deux types d'équipements étant couplés entre eux de manière à pouvoir fonctionner aussi bien simultanément qu'à tour de rôle. Afin de répondre aux prérogatives du développement durable, les équipements de l'installation 1, 10 sont principalement basés sur l'utilisation d'une source d'énergie géothermique, telle que le sol ou l'eau d'une nappe phréatique. Néanmoins, d'autres sources d'énergie, telles que le rayonnement solaire ou l'air ambiant peuvent également être utilisées, en particulier à titre complémentaire par rapport à la source d'énergie géothermique.

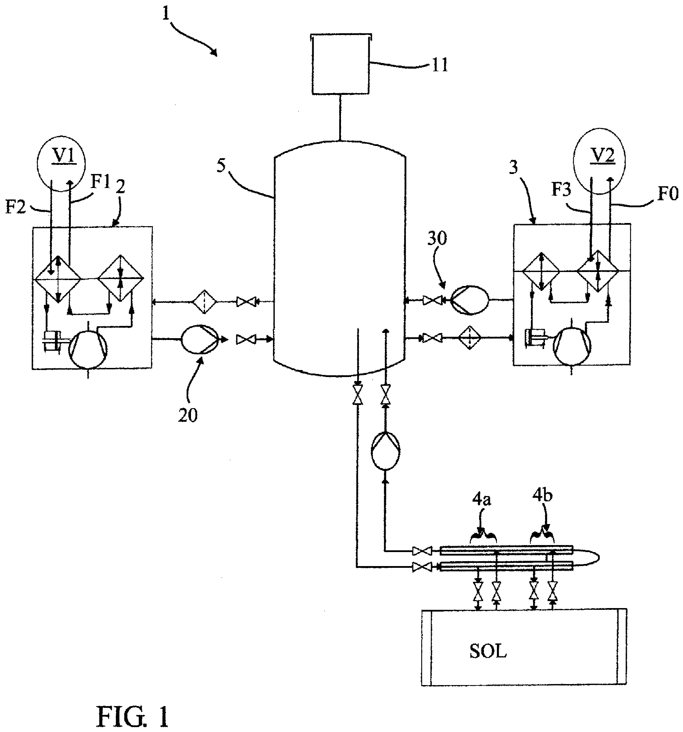

Dans la variante de réalisation illustrée à la figure 1, l'installation 1 selon l'invention comporte deux pompes à chaleur géothermiques 2, 3 reliées chacune, au travers d'un réseau hydraulique 20, 30 dans lequel circule de l'eau glycolée ou similaire, à deux sondes géothermiques 4a, 4b, agencées pour capter l'énergie du sol à une profondeur comprise, selon le cas, entre 50 et 100 mètres. Bien entendu, l'installation 1 peut comporter davantage de sondes géothermiques 4a, 4b, leur nombre et leur dimensionnement étant adapté au cas par cas, en fonction des besoins énergétiques des volumes à traiter.

Dans l'exemple illustré à la figure 1, les pompes à chaleur géothermiques 2, 3 sont chacune de type réversible et sont agencées pour, selon le cas, prélever des calories au sein d'au moins un volume V1, V2 d'une structure telle qu'une cave vinicole pour provoquer une baisse de la température au sein dudit au moins un volume V1, V2, ou introduire des calories au sein d'au moins un volume V1, V2 de ladite cave vinicole et provoquer une augmentation de la température au sein dudit au moins un volume V1, V2. Bien entendu, le mode de fonctionnement de chacune des pompes à chaleur géothermiques 2, 3 sera adapté en fonction des besoins en température des volumes V1, V2, et sélectionné de préférence au moyen d'une centrale de gestion (non illustrée), avantageusement apte à être pilotée à distance et en temps réel.

Ainsi, l'installation 1 représentée à la figure 1 peut fonctionner selon trois modes différents, à savoir un mode dans lequel les deux pompes à chaleur géothermiques 2, 3 sont configurées pour introduire des calories respectivement dans un volume V1, V2 et augmenter la température des volumes V1 et V2, un autre mode dans lequel les deux pompes à chaleur géothermiques 2, 3 sont configurées pour prélever des calories respectivement dans un volume V1, V2 et baisser la température des volumes V1 et V2, et un dernier mode (cf. fig. 1) dans lequel l'une desdites pompes à chaleur géothermiques 2, 3, par exemple la pompe à chaleur géothermique 3, est configurée pour introduire des calories (cf. flèche F0) dans un volume V2 en vue de le réchauffer, tandis que l'autre pompe à chaleur géothermique 2, 3, par exemple la pompe à chaleur géothermique 2 est configurée pour introduire des frigories (cf. flèche F1) dans un volume V1 en vue de le refroidir.

Bien entendu, dans le cadre de la présente invention, il est également envisageable d'équiper l'installation 1 de deux pompes à chaleur 2, 3 non réversibles, dont l'une est agencée uniquement pour prélever des calories au sein d'un volume V1, V2 en vue de le rafraîchir tandis que l'autre est agencée uniquement pour introduire des calories au sein d'un volume V1, V2 en vue de le réchauffer. De même, une configuration dans laquelle une seule des deux pompes à chaleur 2, 3 est de type réversible est également envisageable dans le cadre de la présente invention.

Conformément à l'invention, une telle installation 1 comporte en outre un réservoir tampon 5, placé sur les circuits hydrauliques 20, 30 entre les sondes géothermiques 4a, 4b et chacune des pompes à chaleur géothermiques 2, 3. Le réservoir tampon 5 est rempli d'eau glycolée ou similaire, et est relié à un vase de dilatation 11. Il est de préférence avantageusement revêtu d'un matériau isolant permettant de limiter les échanges thermiques avec le milieu extérieur. Le réservoir tampon 5 est agencé pour récupérer, stocker temporairement, puis réinjecter directement dans les circuits hydrauliques 20, 30 d'une part les calories prélevées (cf. flèche F2) dans les volumes V1 et/ou V2 par la ou les pompes à chaleur géothermiques 2, 3 lorsqu'elles les refroidissent et, d'autre part les frigories extraites inévitablement (cf. flèche F3) par la ou les pompes à chaleur géothermiques 2, 3 lorsqu'elles réchauffent les volumes V1 et V2. Ainsi, plutôt que d'être simplement émises dans une atmosphère extérieure aux volumes V1, V2 et par conséquent perdues, les frigories ou calories récupérées et stockées temporairement par le réservoir tampon 5 peuvent avantageusement remplacer ou compléter, en cas de besoin, celles prélevées par les pompes à chaleur géothermiques 2, 3 dans le sol pour chauffer et/ou rafraîchir les volumes V1, V2. Ceci permet une réactivité accrue des pompes à chaleur géothermiques 2, 3 qui peuvent puiser les calories ou frigories requises directement dans le réservoir tampon 5, sans solliciter les sondes géothermiques 4a, 4b. L'installation 1 est ainsi optimisée au maximum et voit son coefficient de performance amélioré de manière significative, puisque des valeurs comprises entre 7 et 10 peuvent tout à fait être envisagées.

A titre d'exemple, dans la variante de réalisation illustrée à la figure 1, pour introduire des frigories dans le volume V1 (flèche F1), la pompe à chaleur géothermique 2 pourra utiliser comme source d'énergie, non pas les sondes géothermiques 4a, 4b, mais les frigories extraites du volume V2 (flèche F3) par la pompe à chaleur géothermique 3 et stockées temporairement dans le réservoir tampon 5. De même, pour introduire des calories dans le volume V2 (flèche F0), la pompe à chaleur géothermique 3 pourra utiliser comme source d'énergie non pas les sondes géothermiques 4a, 4b, mais les calories extraites du volume V1 (flèche F2) par la pompe à chaleur géothermique 2 et stockées temporairement dans le réservoir tampon 5. Ceci représente une économie d'énergie particulièrement importante.

D'autre part, l'installation 1 est également agencée de manière telle que les calories ou frigories stockées dans le réservoir tampon 5 peuvent être transférées, si nécessaire, vers les sondes géothermiques 4a, 4b, par exemple en vue d'un stockage saisonnier dans le sol, ou pour régénérer ce dernier et éviter notamment tout phénomène de permafrost dû à un prélèvement d'une quantité trop élevée de calories dans le sol. Selon une autre caractéristique de l'installation 1 selon l'invention, le réservoir tampon 5 est agencé pour stocker temporairement des calories ou des frigories d'ores et déjà prélevées dans le sol au moyen des sondes géothermiques 4a, 4b par l'une ou l'autre des pompes à chaleur géothermiques 2, 3 alors que la température souhaitée du volume V1, V2 est déjà atteinte, ou suite à une inversion du mode de fonctionnement d'une pompe à chaleur géothermique 2, 3.

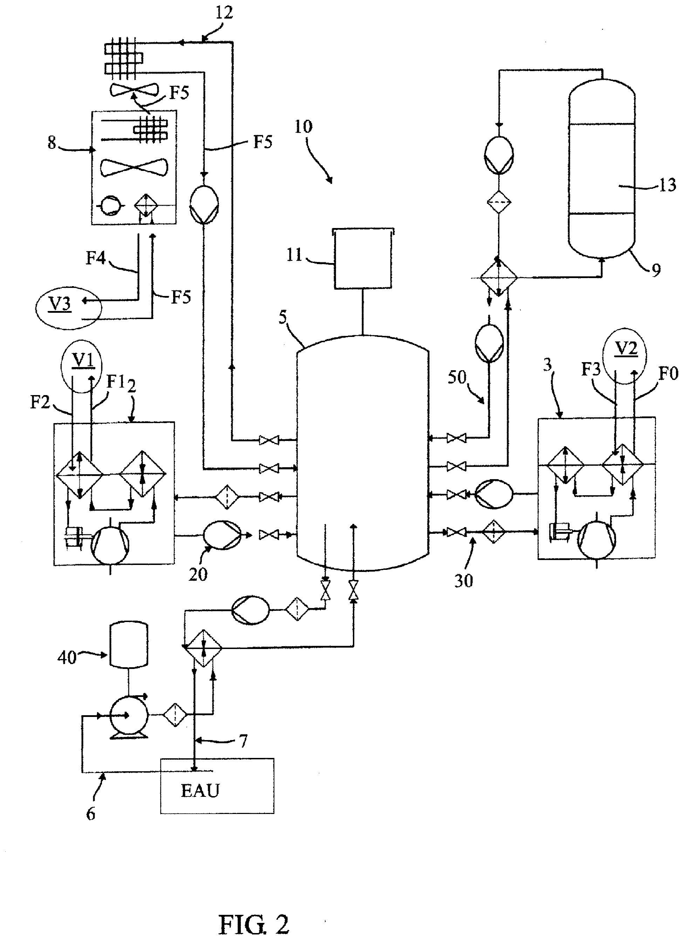

L'installation 10 représentée à la figure 2 est une autre variante de réalisation de l'invention qui se différencie de l'installation 1 précédemment décrite, notamment en ce qu'elle utilise comme source d'énergie principale l'eau prélevée dans les nappes phréatiques ou présente dans le sous-sol. A cet effet, les deux pompes à chaleur géothermiques 2, 3 sont reliées chacune, de manière classique, au travers des réseaux hydrauliques 20, 30 à un forage aquathermique 40 comportant un puits de captage 6 et un puits de rejet 7. Les deux pompes à chaleur géothermiques 2, 3 sont identiques à celles que comporte l'installation 1 et présentent donc les mêmes caractéristiques et possibilités de modes de fonctionnement que ceux décrits précédemment en relation avec l'installation 1. De même, le réservoir tampon 5 que comporte l'installation 10 est identique à celui que comporte l'installation 1, et présente par conséquent les mêmes fonctions et avantages que ceux décrits ci-dessus lors de la description de l'installation 1.

L'installation 10 comporte par ailleurs une pompe à chaleur aérothermique 8, de type non réversible, configurée pour introduire des frigories (cf. flèche F4) en vue de refroidir un volume V3. La pompe à chaleur aérothermique 8 est reliée au réservoir tampon 5, au moyen d'un échangeur 12 par exemple de type air/eau, ou tout moyen équivalent. Ainsi, les calories extraites concomitamment dans le volume V3 par la pompe à chaleur aérothermique 8 (cf. flèche F5) sont récupérées au niveau de l'échangeur 12 puis injectées dans le réservoir tampon 5 où elles viendront s'additionner aux calories et/ou frigories provenant des pompes à chaleur géothermiques 2, 3. Elles y seront donc également stockées en vue d'une utilisation par l'une ou l'autre des pompes à chaleur géothermiques 2,3, comme précédemment décrit. Le cas échéant, et suivant la nature du sous-sol, un transfert des frigories et/ou calories stockées dans le réservoir tampon 5 vers l'eau de la nappe phréatique ou du sous-sol, au moyen du puits de rejet 7, peut également être envisagé en vue d'un stockage saisonnier.

Telle qu'illustrée à la figure 2, l'installation 10 comporte en outre une batterie thermique 9 utilisant avantageusement un matériau à changement de phase 13, capable d'absorber ou de libérer de grandes quantités d'énergie thermique pendant un changement de phase, de solide à liquide et vice-versa, tel que notamment de la paraffine ou tout autre matériau similaire présentant les mêmes propriétés. Bien que dans l'exemple illustré à la figure 2 la batterie thermique 9 est reliée au réservoir tampon 5 au moyen d'un circuit hydraulique 50, d'autres variantes de réalisation de l'installation sont également envisageables, telles que notamment celle dans laquelle la batterie thermique 9 est intégrée au réservoir tampon 5. Avantageusement, une telle batterie thermique 9 permet, à l'instar du réservoir tampon 5, d'assurer une fonction de récupération, de stockage temporaire et de réinjection des calories ou frigories dans les circuits hydrauliques 20, 30. Sa présence permet en particulier de pallier les situations dans lesquelles le réservoir tampon 5 est saturé et garantit ainsi, quelles que soient les circonstances, l'optimisation du procédé de régulation des températures et de production d'eau chaude sanitaire selon l'invention.

Selon une autre variante de réalisation de l'invention permettant d'améliorer encore davantage le coefficient de performance de l'installation, cette dernière peut également comporter au moins un panneau solaire (non illustré) relié audit réservoir tampon (5) et/ou à ladite batterie thermique (9) et permettant à ces derniers de récupérer et réinjecter dans les circuits hydrauliques 20, 30 de ladite installation des calories issues du rayonnement solaire.

### Possibilités d'application industrielle :

Il ressort clairement de cette description que l'invention permet d'atteindre les objectifs fixés. En effet, le procédé et l'installation 1, 10 pour la régulation des températures et la production d'eau chaude sanitaire d'une structure telle que notamment une cave vinicole sont respectueux de l'environnement puisqu'ils reposent sur des sources d'énergie renouvelables ne générant aucune émission de gaz à effet de serre. Par ailleurs, par le biais des différents équipements qui la constituent, l'installation 1, 10 selon l'invention est apte à répondre à l'ensemble des besoins thermiques de ladite structure. En outre, des tests effectués au moyen d'une installation 1, 10 selon l'invention ont permis d'établir que grâce au recyclage des calories ou frigories rejetées par les pompes à chaleur géothermiques 2, 3, 8 et le contrôle de l'ensemble des équipements par une centrale de gestion, le coefficient de performance d'une telle installation est excellent puisqu'il atteint des valeurs comprises entre 7 et 10. Ceci répond par conséquent également au but fixé consistant à réduire la facture énergétique de manière significative.

La présente invention n'est pas limitée à l'exemple de réalisation décrit mais s'étend à toute modification et variante évidentes pour un homme du métier tout en restant dans l'étendue de la protection définie dans les revendications annexées. En particulier, bien qu'ayant été décrite dans le cadre du secteur vinicole, la présente invention est transposable à d'autres industries, notamment du secteur agroalimentaire ou hôtelier, qui rencontrent des contraintes tout à fait similaires en matière énergétique.

## Revendications

1. Procédé pour la régulation des températures et la production d'eau chaude sanitaire au sein d'une structure telle que notamment une cave vinicole, **caractérisé en ce que** l'on utilise au moins une première pompe à chaleur (2) et au moins une seconde pompe à chaleur (3), l'une d'entre elles au moins étant de type géothermique et étant reliée à au moins une source d'énergie géothermique (4, 40), on prélève des calories au sein d'au moins un volume (V1, V2) de ladite structure au moyen de ladite première pompe à chaleur (2) et/ou de ladite seconde pompe à chaleur (3) pour provoquer une baisse de la température au sein dudit au moins un volume (V1, V2) de ladite structure, et/ou on introduit des calories au sein d'au moins un volume (V1, V2) de ladite structure au moyen de ladite première pompe à chaleur (2) et/ou de ladite seconde pompe à chaleur (3) pour provoquer une augmentation de la température au sein dudit au moins un volume (V1, V2) de ladite structure, ledit procédé prévoyant encore que lorsqu'on prélève des calories au sein d'au moins un volume (V1, V2) de ladite structure au moyen de ladite première pompe à chaleur (2) et/ou de ladite seconde pompe à chaleur (3), on récupère et on stocke temporairement lesdites calories prélevées dans ledit au moins un volume (V1, V2) dans au moins un réservoir tampon (5), puis on transfère au moins une partie desdites calories stockées temporairement dans ledit réservoir tampon (5) vers ladite première pompe à chaleur (2) et/ou vers ladite seconde pompe à chaleur (3) et/ou vers ladite une source d'énergie géothermique (4, 40), tandis que lorsqu'on introduit des calories au sein d'au moins un volume (V1, V2) de ladite structure au moyen de ladite première pompe à chaleur (2) et/ou de ladite seconde pompe à chaleur (3), on récupère et on stocke temporairement dans ledit réservoir tampon (5) les frigories générées concomitamment par ladite première pompe à chaleur (2) et/ou ladite seconde pompe à chaleur (3), puis on transfère au moins une partie desdites frigories stockées temporairement dans ledit réservoir tampon (5) vers ladite première pompe à chaleur (2) et/ou vers ladite seconde pompe à chaleur (3) et/ou vers ladite source d'énergie géothermique (4, 40).

2. Procédé selon la revendication 1, **caractérisé en ce que** l'on utilise au moins deux pompes à chaleur (2, 3) de type géothermique.

3. Procédé selon la revendication 1, **caractérisé en ce que** l'on utilise au moins une pompe à chaleur de type géothermique (2, 3) et au moins une pompe à chaleur de type aérothermique (8).

4. Procédé selon la revendication 1, **caractérisé en ce que** l'on utilise au moins une pompe à chaleur (2, 3) de type réversible.

5. Procédé selon la revendication 1, **caractérisé en ce que** l'on utilise ledit réservoir tampon (5) pour stocker temporairement des calories fournies par au moins une source d'énergie supplémentaire.

6. Procédé selon la revendication 5, **caractérisé en ce que** l'on utilise l'énergie solaire en tant que source d'énergie supplémentaire.

7. Procédé selon la revendication 1, **caractérisé en ce que** l'on stocke temporairement au moins une partie desdites calories ou desdites frigories au sein d'au moins un dispositif de stockage additionnel.

8. Procédé selon la revendication 7, **caractérisé en ce que** l'on utilise en tant que dispositif de stockage additionnel au moins une batterie thermique (9) comportant au moins un matériau à changement de phase.

9. Procédé selon l'une quelconque des revendications 1 ou 7, **caractérisé en ce que** l'on utilise ledit réservoir tampon (5) ou ledit dispositif de stockage additionnel (9) pour stocker des calories ou des frigories prélevées au sein de ladite source d'énergie géothermique (4, 40) au moyen d'au moins ladite première ou seconde pompe à chaleur (2, 3).

10. Installation (1, 10) pour la mise en oeuvre du procédé selon la revendication 1, **caractérisée en ce qu'**elle comporte au moins une première pompe à chaleur (2) et au moins une seconde pompe à chaleur (3), l'une d'entre elles au moins étant de type géothermique et étant reliée à au moins une source d'énergie géothermique (4, 40), ladite installation (1, 10) étant agencée pour, selon les besoins, prélever des calories au sein d'au moins un volume (V1, V2) de ladite structure au moyen de ladite première pompe à chaleur (2) et/ou de ladite seconde pompe à chaleur (3) afin de provoquer une baisse de la température au sein dudit au moins un volume (V1, V2) de ladite structure, et/ou introduire des calories au moyen de ladite première pompe à chaleur (2) et/ou de ladite seconde pompe à chaleur (3) afin de provoquer une augmentation de la température au sein d'au moins un volume (V1, V2) de ladite structure, ladite installation (1, 10) comportant en outre au moins un réservoir tampon (5) agencé pour, selon le cas:
- récupérer et stocker temporairement au moins une partie des calories prélevées par ladite première pompe à chaleur (2) et/ou ladite seconde pompe à chaleur (3) dans ledit au moins un volume (V1, V2), ou
- récupérer et stocker les frigories générées concomitamment par ladite première pompe à chaleur (2) et/ou ladite seconde pompe à chaleur (3) lorsqu'elle introduit des calories dans ledit au moins un volume (V1, V2) de ladite structure,
ledit réservoir tampon (5) étant en outre agencé pour transférer au moins une partie desdites calories ou desdites frigories stockées temporairement dans ledit réservoir tampon (5) vers ladite première pompe à chaleur (2) et/ou ladite seconde pompe à chaleur (3) et/ou ladite source d'énergie géothermique (4, 40).

11. Installation (1, 10) selon la revendication 10, **caractérisé en ce qu'**elle comporte au moins deux pompes à chaleur de type géothermique (2, 3).

12. Installation (1, 10) selon la revendication 10, **caractérisée en ce qu'**elle comporte au moins une pompe à chaleur (2, 3) de type géothermique et au moins une pompe à chaleur de type aérothermique (8).

13. Installation (1, 10) selon la revendication 10, **caractérisée en ce que** l'une au moins desdites première ou seconde pompe à chaleur (2, 3) est de type réversible.

14. Installation (1, 10) selon la revendication 10, **caractérisée en ce que** ledit réservoir tampon (5) est relié à au moins un panneau solaire agencé pour récupérer le rayonnement solaire.

15. Installation (1, 10) selon la revendication 10, **caractérisée en ce qu'**elle comporte au moins un dispositif de stockage additionnel agencé pour stocker lesdites calories ou lesdites frigories.

16. Installation (1, 10) selon la revendication 15, **caractérisée en ce que** ledit dispositif de stockage additionnel comporte au moins une batterie thermique (9) comportant au moins un matériau à changement de phase (13).

17. Installation (1, 10) selon la revendication 15, **caractérisée en ce que** ledit dispositif de stockage additionnel est intégré audit réservoir tampon (5).

18. Installation (1, 10) selon la revendication 15, **caractérisée en ce que** ledit dispositif de stockage additionnel est relié audit réservoir tampon (5) au moyen d'un circuit hydraulique (50).

19. Installation (1, 10) selon la revendication 10, **caractérisée en ce qu'**elle comporte une centrale de gestion.

## Patentansprüche

1. Verfahren für die Regulierung der Temperatur und der Produktion von warmem Wasser innerhalb einer Struktur wie insbesondere eines Weinkellers, **dadurch gekennzeichnet, dass** mindestens eine erste Wärmepumpe (2) und mindestens eine zweite Wärmepumpe (3) verwendet werden, wobei mindestens eine von ihnen vom geothermischen Typ ist und mit mindestens einer geothermischen Energiequelle (4, 40) verbunden ist, Kalorien aus mindestens einem Volumen (V1, V2) der Struktur mittels der ersten Wärmepumpe (2) und/oder der zweiten Wärmepumpe (3) entnommen werden, um eine Senkung der Temperatur innerhalb des mindestens einen Volumens (V1, V2) der Struktur zu bewirken, und/oder Kalorien in mindestens ein Volumen (V1, V2) der Struktur mittels der ersten Wärmepumpe (2) und/oder der zweiten Wärmepumpe (3) eingeleitet werden, um eine Erhöhung der Temperatur innerhalb des mindestens einen Volumens (V1, V2) der Struktur zu bewirken, wobei das Verfahren noch vorsieht, dass, wenn Kalorien aus mindestens einem Volumen (V1, V2) der Struktur mittels der ersten Wärmepumpe (2) und/oder der zweiten Wärmepumpe (3) entnommen werden, die aus dem mindestens einen Volumen (V1, V2) entnommenen Kalorien zurückgewonnen und in mindestens einem Pufferspeicher (5) zeitweilig gespeichert werden, dann mindestens ein Teil der zeitweilig im Pufferspeicher (5) gespeicherten Kalorien zur ersten Wärmepumpe (2) und/oder zur zweiten Wärmepumpe (3) und/oder zu einer geothermischen Energiequelle (4, 40) geleitet wird, wogegen Kalorien in mindestens ein Volumen (V1, V2) der Struktur mittels der ersten Wärmepumpe (2) und/oder der zweiten Wärmepumpe (3) eingeleitet werden, die von der ersten Wärmepumpe (2) und/oder der zweiten Wärmepumpe (3) begleitend erzeugten Frigorien zurückgewonnen und zeitweilig im Pufferspeicher (5) gespeichert werden, dann mindestens ein Teil der zeitweilig im Pufferspeicher (5) gespeicherten Frigorien zur ersten Wärmepumpe (2) und/oder zur zweiten Wärmepumpe (3) und/oder zur geothermischen Energiequelle (4, 40) weitergeleitet werden.

2. Verfahren nach Anspruch 1, **dadurch gekennzeichnet, dass** mindestens zwei Wärmepumpen (2, 3) geothermischen Typs verwendet werden.

3. Verfahren nach Anspruch 1, **dadurch gekennzeichnet, dass** mindestens eine Wärmepumpe geothermischen Typs (2, 3) und mindestens eine Wärmepumpe aerothermischen Typs (8) verwendet wird.

4. Verfahren nach Anspruch 1, **dadurch gekennzeichnet, dass** mindestens eine Wärmepumpe (2, 3) des reversiblen Typs verwendet wird.

5. Verfahren nach Anspruch 1, **dadurch gekennzeichnet, dass** der Pufferspeicher (5) verwendet wird, um von mindestens einer zusätzlichen Energiequelle bereitgestellte Kalorien zeitweilig zu speichern.

6. Verfahren nach Anspruch 5, **dadurch gekennzeichnet, dass** die Sonnenenergie als zusätzliche Energiequelle verwendet wird.

7. Verfahren nach Anspruch 1, **dadurch gekennzeichnet, dass** mindestens ein Teil der Kalorien oder der Frigorien in mindestens einer zusätzlichen Lagervorrichtung zeitweilig gelagert wird.

8. Verfahren nach Anspruch 7, **dadurch gekennzeichnet, dass** als zusätzliche Lagervorrichtung mindestens eine thermische Batterie (9) verwendet wird, die mindestens ein Phasenwechselmaterial aufweist.

9. Verfahren nach einem der Ansprüche 1 oder 7, **dadurch gekennzeichnet, dass** der Pufferspeicher (5) oder die zusätzliche Lagervorrichtung (9) verwendet werden, um aus der geothermischen Energiequelle (4, 40) mittels mindestens der ersten oder zweiten Wärmepumpe (2, 3) entnommene Kalorien oder Frigorien zu speichern.

10. Anlage (1, 10) für die Umsetzung des Verfahrens nach Anspruch 1, **dadurch gekennzeichnet**, sie mindestens eine erste Wärmepumpe (2) und mindestens eine zweite Wärmepumpe (3) aufweist, wobei mindestens eine von ihnen vom geothermischen Typ ist und mit mindestens einer geothermischen Energiequelle (4, 40) verbunden ist, wobei die Anlage (1, 10) ausgebildet ist, um je nach Bedarf Kalorien aus mindestens einem Volumen (V1, V2) der Struktur mittels der ersten Wärmepumpe (2) und/oder der zweiten Wärmepumpe (3) zu entnehmen, um eine Senkung der Temperatur innerhalb des mindestens einen Volumens (V1, V2) der Struktur zu bewirken, und/oder Kalorien mittels der ersten Wärmepumpe (2) und/oder der zweiten Wärmepumpe (3) einzuleiten, um eine Erhöhung der Temperatur innerhalb des mindestens einen Volumens (V1, V2) der Struktur zu bewirken, wobei die Anlage (1, 10) ferner mindestens einen Pufferspeicher (5) aufweist, der ausgebildet ist, um je nach Fall:
- mindestens einen Teil der von der ersten Wärmepumpe (2) und/oder der zweiten Wärmepumpe (3) aus dem mindestens einen Volumen (V1, V2) entnommenen Kalorien zurückzugewinnen und zeitweilig zu speichern, oder
- die von der ersten Wärmepumpe (2) und/oder der zweiten Wärmepumpe (3) begleitend erzeugten Frigorien zurückzugewinnen und zu speichern, wenn sie Kalorien in das mindestens eine Volumen (V1, V2) der Struktur einleitet,
wobei der Pufferspeicher (5) ferner ausgebildet ist, um mindestens einen Teil der zeitweilig im Pufferspeicher (5) gespeicherten Kalorien oder Frigorien zur ersten Wärmepumpe (2) und/oder zur zweiten Wärmepumpe (3) und/oder zur geothermischen Energiequelle (4, 40) weiterzuleiten.

11. Anlage (1, 10) nach Anspruch 10, **dadurch gekennzeichnet, dass** sie mindestens zwei Wärmepumpen geothermischen Typs (2, 3) aufweist.

12. Anlage (1, 10) nach Anspruch 10, **dadurch gekennzeichnet, dass** sie mindestens eine Wärmepumpe (2, 3) geothermischen Typs und mindestens eine Wärmepumpe aerothermischen Typs (8) aufweist.

13. Anlage (1, 10) nach Anspruch 10, **dadurch gekennzeichnet, dass** mindestens eine der ersten oder zweiten Wärmepumpe (2, 3) vom reversiblen Typ ist.

14. Anlage (1, 10) nach Anspruch 10, **dadurch gekennzeichnet, dass** der Pufferspeicher (5) mit mindestens einem Solarpaneel verbunden ist, das ausgebildet ist, um die Sonnenstrahlung aufzufangen.

15. Anlage (1, 10) nach Anspruch 10, **dadurch gekennzeichnet, dass** sie mindestens eine zusätzliche Lagervorrichtung aufweist, die ausgebildet ist, um die Kalorien oder die Frigorien zu lagern.

16. Anlage (1, 10) nach Anspruch 15, **dadurch gekennzeichnet, dass** die zusätzliche Lagervorrichtung mindestens eine thermische Batterie (9) aufweist, die mindestens ein Phasenwechselmaterial (13) aufweist.

17. Anlage (1, 10) nach Anspruch 15, **dadurch gekennzeichnet, dass** die zusätzliche Lagervorrichtung in den Pufferspeicher (5) integriert ist.

18. Anlage (1, 10) nach Anspruch 15, **dadurch gekennzeichnet, dass** die zusätzliche Lagervorrichtung mit dem Pufferspeicher (5) mittels eines Hydraulikkreislaufs (50) verbunden ist.

19. Anlage (1, 10) nach Anspruch 10, **dadurch gekennzeichnet, dass** sie eine Verwaltungszentrale aufweist.

## Claims

1. A method for regulating temperatures and producing hot domestic supply water within a structure, in particular a viticultural cellar, **characterized in that** at least one first heat pump (2) and at least one second heat pump (3) are used, at least one of them being of the geothermal type and being connected to at least one geothermal energy source (4, 40), calories are taken from within at least one volume (V1, V2) of said structure using said first heat pump (2) and/or said second heat pump (3) to cause a drop in the temperature within said at least one volume (V1, V2) of said structure, and/or calories are introduced within at least one volume (V1, V2) of said structure using said first heat pump (2) and/or said second heat pump (3) to cause an increase in the temperature within said at least one volume (V1, V2) of said structure, said method further setting out that when calories are taken from within at least one volume (V1, V2) of said structure using said first heat pump (2) and/or said second heat pump (3), said calories withdrawn from said at least one volume (V1, V2) are recovered and temporarily stored in at least one buffer tank (5), then at least part of said calories temporarily stored in said buffer tank (5) is transferred to said first heat pump (2) and/or to said second heat pump (3) and/or to said geothermal energy source (4, 40), whereas when calories are introduced within at least one volume (V1, V2) of said structure using said first heat pump (2) and/or said second heat pump (3), the frigories generated concomitantly by said first heat pump (2) and/or said second heat pump (3) are recovered and temporarily stored in said buffer tank (5), then at least part of said frigories temporarily stored in said buffer tank (5) is transferred to said first heat pump (2) and/or to said second heat pump (3) and/or to said geothermal energy source (4, 40).

2. The method according to claim 1, **characterized in that** at least two heat pumps (2, 3) of the geothermal type are used.

3. The method according to claim 1, **characterized in that** at least one heat pump of the geothermal type (2, 3) and at least one heat pump of the aerothermal type (8) are used.

4. The method according to claim 1, **characterized in that** at least one heat pump (2, 3) of the reversible type is used.

5. The method according to claim 1, **characterized in that** said buffer tank (5) is used to temporarily store calories provided by at least one additional energy source.

6. The method according to claim 5, **characterized in that** solar energy is used as additional energy source.

7. The method according to claim 1, **characterized in that** at least part of said calories or said frigories is temporarily stored within at least one additional storage device.

8. The method according to claim 7, **characterized in that** at least one thermal battery (9) including at least one phase change material is used as additional storage device.

9. The method according to any one of claims 1 or 7, **characterized in that** said buffer tank (5) or said additional storage device (9) is used to store calories or frigories taken from within said geothermal energy source (4, 40) using at least said first or second heat pump (2, 3).

10. An installation (1, 10) for implementing the method according to claim 1, **characterized in that** it includes at least one first heat pump (2) and at least one second heat pump (3), at least one of them being of the geothermal type and being connected to at least one geothermal energy source (4, 40), said installation (1, 10) being arranged so as, depending on the needs, to withdraw calories from within at least one volume (V1, V2) of said structure using said first heat pump (2) and/or said second heat pump (3) in order to cause a drop in the temperature within said at least one volume (V1, V2) of said structure, and/or to introduce calories using said first heat pump (2) and/or said second heat pump (3) in order to cause an increase in the temperature within at least one volume (V1, V2) of said structure, said installation (1, 10) further including at least one buffer tank (5) arranged, depending on the case, to:
- recover and temporarily store at least part of the calories withdrawn by said first heat pump (2) and/or said second heat pump (3) in said at least one volume (V1, V2), or
- recover and store the frigories concomitantly generated by said first heat pump (2) and/or said second heat pump (3) when it introduces calories into said at least one volume (V1, V2) of said structure,
said buffer tank (5) further being arranged to transfer at least part of said calories or said frigories temporarily stored in said buffer tank (5) to said first heat pump (2) and/or said second heat pump (3) and/or said geothermal energy source (4, 40).

11. The installation (1, 10) according to claim 10, **characterized in that** it includes at least two heat pumps of the geothermal type (2, 3).

12. The installation (1, 10) according to claim 10, **characterized in that** it includes at least one heat pump (2, 3) of the geothermal type and at least one heat pump of the aerothermal type (8).

13. The installation (1, 10) according to claim 10, **characterized in that** at least one of said first or second heat pump (2, 3) is of the reversible type.

14. The installation (1, 10) according to claim 10, **characterized in that** said buffer tank (5) is connected to at least one solar panel arranged to recover the solar radiation.

15. The installation (1, 10) according to claim 10, **characterized in that** it includes at least one additional storage device arranged to store said calories or said frigories.

16. The installation (1, 10) according to claim 15, **characterized in that** said additional storage device includes at least one thermal battery (9) including at least one phase change material (13).

17. The installation (1, 10) according to claim 15, **characterized in that** said additional storage device is integrated into said buffer tank (5).

18. The installation (1, 10) according to claim 15, **characterized in that** said additional storage device is connected to said buffer tank (5) using a hydraulic circuit (50).

19. The installation (1, 10) according to claim 10, **characterized in that** it includes a management unit.
